Europäisches Patentamt

European Patent Office

Office européen des brevets

(11) Publication number: **0 217 603**
**A2**

## (12) EUROPEAN PATENT APPLICATION

(21) Application number: 86307216.1

(22) Date of filing: 19.09.86

(51) Int. Cl.⁴: **F 16 J 15/32**

(30) Priority: 27.09.85 GB 8523893

(43) Date of publication of application:
08.04.87 Bulletin 87/15

(84) Designated Contracting States:
AT BE CH DE FR IT LI NL SE

(71) Applicant: J.H. FENNER & CO. LIMITED
Marfleet
Hull North Humberside, HU9 5RA (GB)

(72) Inventor: Potter, Charles William
23 Orchid Street
Harpurhey Manchester M1 1XX (GB)

(74) Representative: Funge, Harry et al
SYDNEY E. M'CAW & CO. 41-51 Royal Exchange Cross
Street
Manchester M2 7BD (GB)

(54) Fluid seals.

(57) A fluid seal wherein the sealing element (12) comprises a frusto-conical shell of polytetrafluorethylene loaded into sealing engagement with a surface of a rotating shaft (23) is provided with a contaminant reject formation (24) on a profiled region (21) of the shell at a position thereof remote from the sealing edge of the seal. By means of the invention the problem of the ingress of contaminants met with in prior art structures is largely avoided.

FIG. 2

Bundesdruckerei Berlin

# Description

## FLUID SEALS

The invention concerns fluids seals, and has particular, though not exclusive reference to oil seals wherein the sealing element comprises a thin frusto-conical shell of polytetrafluorethylene (PTFE).

Oil seals are known wherein the PTFE sealing element is directly loaded by a garter spring, such an arrangement being shown in our prior U.K. Patent No. 2096246.

The inner surface of the beam portion of the sealing element disclosed in prior U.K. Patent 2096246 is embossed in closely spaced disposition relative to the sealing edge to provide a hydrodynamic oil return characteristic to the seal.

However, the very process which operates to return leakage oil as a result of the hydrodynamic action of the embossing serves also to encourage the ingress of contaminants into the sealing area and their transfer past the seal.

The object of the present invention is to provide a means to inhibit the ingress of contaminants and thereby avoid a problem inherent in the known PTFE sealing elements in certain operating conditions.

It is known, for example from our prior U.K. Patent No. 1,536,659 to provide a continuous barrier in spaced disposition relative to the sealing lip of a lip seal for the express purpose of contaminant rejection, the barrier being at the low pressure side of the sealing lip and extending to a position closely adjacent the surface to be sealed.

The sealing member disclosed in prior U.K. Patent 1,536,659 aforesaid is of an elastomeric material and of moulded form, the contaminant reject barrier being formed integrally with the sealing number.

The frusto-conical nature of the PTFE sealing element of prior U.K. Patent 2096246, and more particularly the cone angle thereof adjacent the sealing region in the use condition of the seal, is such that the spacing of the inner surface of the sealing element from the surface to be sealed increases rapidly with increasing distance from the sealing region, thus requiring that any contaminant reject formation be of material dimensions if it is to be effective for its intended purpose.

In the case of such as the elastomeric sealing member disclosed in prior U.K. Patent 1,536,659, any requisite height of barrier could be achieved simply by adding more material at the relevant surface of the sealing member. However, such a course is not available in the context of a sealing element comprising a thin film of PTFE of constant thickness, and thus the teaching of prior U.K. 1,536,659 appears not to have application in the context of PTFE seals of the kind involved.

The present invention is predicated upon the appreciation that a requisite juxtaposition of a contaminant reject means relative to a surface to be sealed can indeed be achieved in the context of a PTFE sealing element, notwithstanding the contrary expectation suggested by the prior U.K. specification aforesaid.

According to the present invention there is proposed a fluid seal having a sealing element in the form of a frusto-conical shell of polytetrafluorethylene or the like, characterised in that the said shell is profiled at a position spaced from the sealing edge of the element and is embossed in such region in such manner as to provide a contaminant reject formation.

Thus, in contradistinction to the prior art as taught by U.K. Patent 1,536,659 wherein the reject formation is built onto an existing surface, in the present instance, the relevant part of the surface of the sealing element is brought closer to the surface to be sealed by profiling and the requisite formation is embossed into such surface in the region of the profiling.

The invention will now be described further by way of example only, with reference to the accompanying diagrammatic drawings illustrating one embodiment thereof and in which:-

Figure 1 is a diagrammatic illustration of a part of a conventional prior art seal embodying the PTFE sealing element;

Figure 2 is a view corresponding to Figure 1 and shows the seal of the present invention;

Figure 3 is an enlarged view of a part of the sealing element of Figure 2;

Figure 4 is a view corresponding to Figure 3 and shows an alternative form of contaminant reject formation;

Figure 5 is a view corresponding to Figure 2 and shows an alternative loading means to the conventional garter spring;

Figure 6 is a diagrammatic perspective view of the element defining the loading means shown in Figure 5 and includes a scrap view of the material thereof drawn to a larger scale; and

Figures 7, 8 + 9 show an alternative manner of usage of the loading means shown in Figure 6.

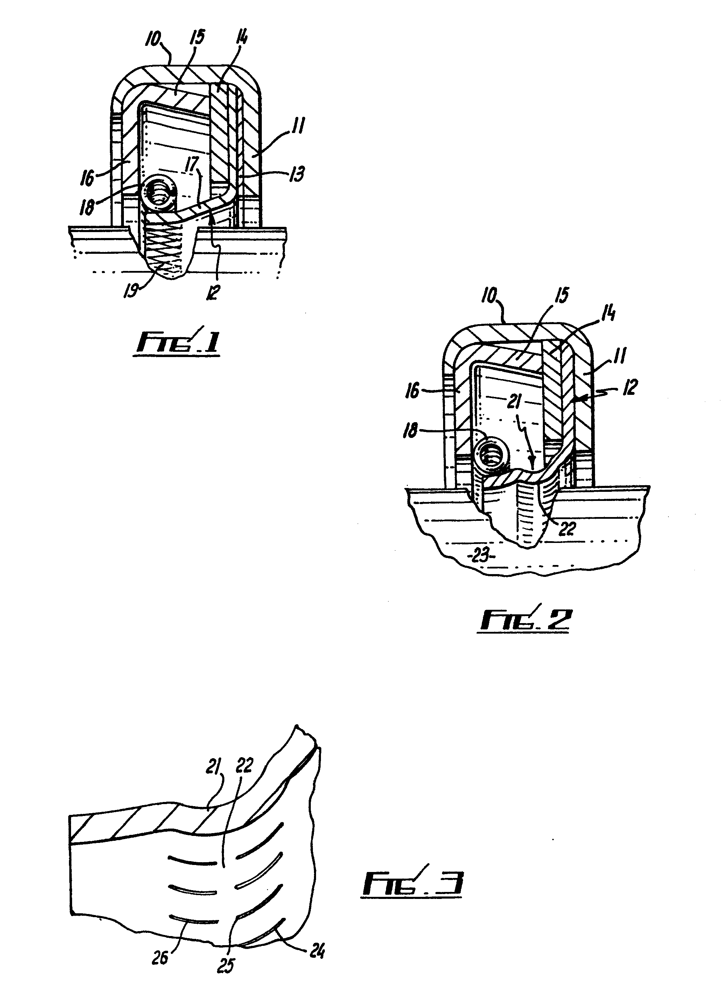

Referring now to the drawings, and in particular to Figure 1 thereof, the prior art fluid seal comprises an outer metal casing 10 having an inwardly directed flange 11 to which is secured a frusto-conical sealing element 12 constituted by relatively thin PTFE film, there being an intervening sealing washer 13.

Sealing element 12 is secured in position by a metal washer 14 and an inner metal case 15, such case also having an inwardly directed flange 16.

The beam portion 17 of the sealing element 12 is directly loaded radially by a garter spring 18 which lies between beam portion 17 and the metal cover constituted by the metal cases 10 and 15. The inner surface of beam portion 17 is provided with a hydrodynamic oil return formation comprising an embossment 19 which terminates short of the sealing edge of the frusto-conical sealing element 12, the sealing edge being such as also to provide static sealing.

The prior arrangement as aforesaid is described and illustrated in U.K. Patent 2096246.

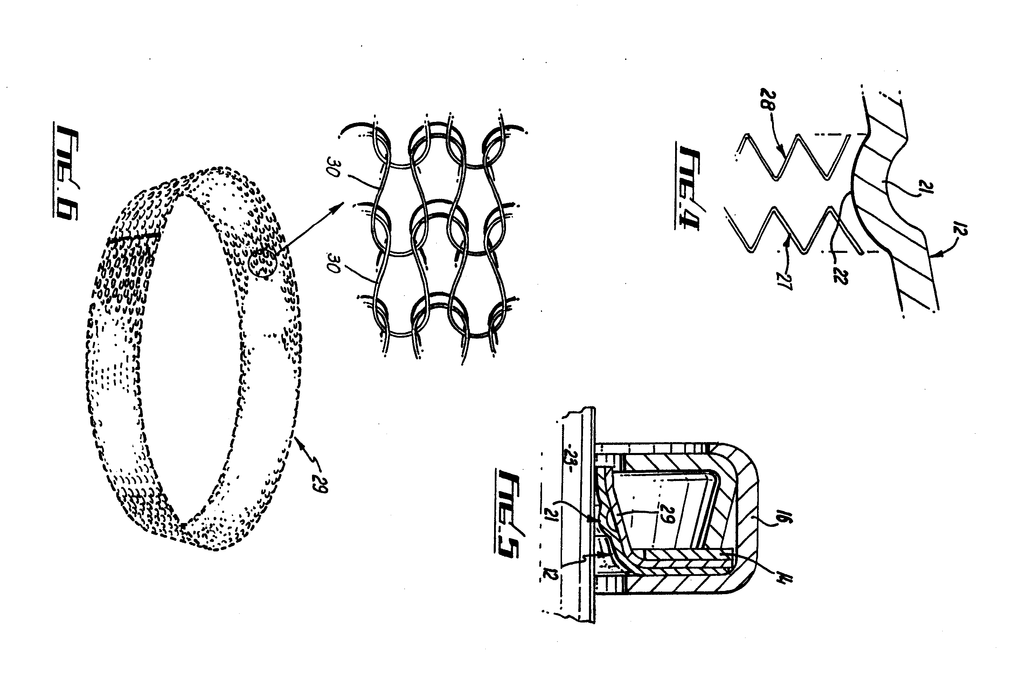

Referring now to Figure 2, the present invention provides for the inclusion of a contaminant reject formation in such as the oil seal illustrated in Figure 1, sealing element 12 being profiled to give a rib 21 at the inner face of the sealing element in spaced disposition relative to the sealing edge. The rib 21 is of such extent, in the radial direction of the seal, as to bring the top 22 thereof into closely spaced disposition relative to the surface of the shaft 23 to be sealed when the seal is in its use condition, the surface of the rib 21 being embossed with a multiplicity of closely spaced, parallel bars 24 each inclined to the axis of the seal and with the inner end 25 thereof directed against the rotation of the shaft.

In a typical example, the thickness of the material of the sealing element is between 0.5 and 1.0mm, whilst the height of the bars relative to the surface of the rib from which the same extend is between 0.060 and 0.25mm, the apices of the bars being spaced from the surface of the shaft by between 0.015 and 0.025mm. The spacing of the bars in the peripheral direction of the seal will vary according to shaft diameter, these typically being 12 bars per circumferential centimetre for a shaft diameter of, say, 5 cm and five bars per unit of length for a shaft diameter of, say, 12.5cm. The helix angle of the bars on the rib lies between 2° and 7°.

In common with the arrangement shown in Figure 1, so too does the embodiment of Figure 2 have a hydrodynamic oil return formation, such formation comprising a further multiplicity of embossed bars 26, the individual bars of the further multiplicity thereof being oppositely inclined with respect to the bars 24 of the contaminant reject formation and being positioned between such latter formation and the sealing edge.

In forming the sealing element of the invention an annulus of suitable PTFE material is cut from a flat sheet thereof, and such annulus is then embossed with the bars 24, 26 of the contaminant reject and of the oil return formations, respectively. The embossed annulus is then profiled to create the rib 21 and shaped to the frusto-conical form.

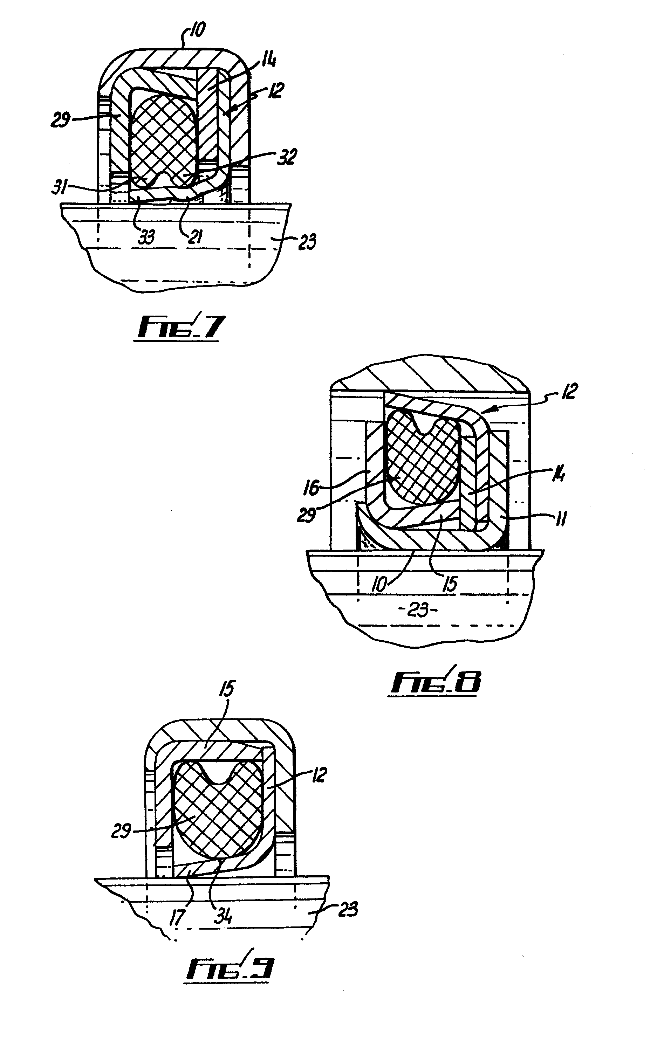

Other forms of contaminant reject and/or oil return formations may be preferred, a typical alternative arrangement being shown in Figure 4, the continuous array of bars 27 facing towards the sealing edge being the oil return formation and that array of bars 28 facing away from the sealing edge serving to prevent the ingress of contaminants. Each said array comprises two multiplicities of spaced parallel bars arranged alternately in end-to-end disposition, the individual bars of one multiplicity being oppositely inclined from those of the other multiplicity relative to the axis of the seal.

It may be found convenient, in some instances, to provide a second garter spring (not shown) in alignment with the rib formed in the sealing member, thus to maintain the same in position relative to the shaft and improve the performance of the seal.

As an alternative to the use of two garter springs, in the event that loading in the region of the contaminant reject formation is thought desirable, it is proposed to use a loading member 29 of a kind which will apply a load to a substantial region of the rear face of the frusto-conical sealing member, a seal including such a loading member being shown in Figure 5. The arrangement shown comprises a knitted tube of stainless steel wire, the tube being flattened and assuming the generally frusto-conical configuration shown in Figure 6 on being brought into circular form about an axis perpendicular to the plane of flattened tube and with the ends thereof in abutment. The lesser diameter edge of the loading member, together with the corresponding edge of the sealing member, is clamped between spaced flanges on the seal casing. In the arrangement of Figure 5, the interlocking loops 30 of the knitted wire fabric provide an even radial loading on the PTFE sealing member 12, and act as minute individual springs.

The loading means aforesaid is thought to be of wider application than that evidenced by its use in the embodiment herein described, and may well be of general use in lieu of a garter spring in situations where loading of a sealing element, rib or edge is required.

If loading is required along a line or narrow band, the flattened tube may be used in the configuration shown in Figures 7 to 9, an appropriate length of the material being folded about an axis extending longitudinally thereof and the ends of such material being brought into abutment. In this particular use condition the loading element is U-shaped transverse cross-section, and loading may be applied to the PTFE sealing member, or, for that matter, to the elastomeric annulus of such as the arrangement shown in U.K. Patent 1,536,659, through the upper extremities of the adjacent limbs of the cross-section or through the base thereof, as required.

In the arrangement shown in Figure 7, loading is applied to the sealing element 12 by the loading member 29 at spaced locations 31, 32 respectively aligned with the sealing edge (or region) 33 and with the rib 21 of sealing member 12. Figure 8 shows an arrangement analogous to that illustrated in Figure 7, but in this instance the sealing member 12 does not have a rib and the arrangement is intended to provide a seal between a stationary shaft and a rotating housing.

In the case of the Figure 9 embodiment, the loading member 29 is inverted relative to that shown in the embodiment of Figure 7, and applies a pressure to the beam portion 17 of the sealing member 12 along a line or narrow band 34, the PTFE sealing member being provided with a rib or not, as required.

The invention is not limited to the exact details herein set forth, since alternatives will readily present themselves to one skilled in the art. Thus, for example, whilst the profiling disclosed involves the provision of a rib of arcuate form, it may be found convenient, in some instances, to rely upon other profiles, and in this regard a rib of triangular cross-section is thought to be of ready application.

It is to be understood that whilst the contaminant reject/oil return formation is herein disclosed by reference to the term "bar", such term is to be so construed as to include not only an element which extends from the surface of the PTFE sealing element towards the surface to be sealed but also an elongate trough or recess in the surface of the said sealing element.

## Claims

1. A fluid seal having a sealing element in the form of a frusto-conical shell of polytetrafluorethylene or the like, characterised in that the said shell is profiled at a position spaced from the sealing edge of the element and is embossed in such region in such manner as to provide a contaminant reject formation.

2. A fluid seal as claimed in claim 1, wherein the surface of the sealing element in the profiled region thereof is convex towards the surface to be sealed and the contaminant reject formation exists on a flank thereof remote from the sealing edge of said sealing element.

3. A fluid seal as claimed in claim 1 or 2, wherein the contaminant reject formation comprises a multiplicity of spaced parallel bars inclined to the axis of the seal.

4. A fluid seal as claimed in any one of the preceding claims, wherein the profiled region of the sealing element includes an oil return formation in addition to the contaminant reject formation, the oil return formation being provided intermediate the contaminant reject formation and the sealing edge of the seal.

5. A fluid seal as claimed in claim 4, wherein the oil return formation comprises a multiplicity of spaced parallel bars inclined to the axis of the seal.

6. A fluid seal as claimed in any one of the preceding claims, wherein the contaminant reject formation is adapted and arranged to operate in either direction of movement relative to the sealing edge of the surface to be sealed.

7. A fluid seal as claimed in claim 6, wherein the contaminant reject formation includes respective multiplicities of spaced parallel bars inclined to the axis of the seal, individual bars of the said multiplicities alternating in the peripheral direction of the seal and being oppositely inclined with respect to the said axis.

8. A fluid seal as claimed in claim 7, wherein successive oppositely inclined bars of the said multiplicities thereof exist in end-to-end disposition, thus to provide a continuous barrier in the peripheral direction of the seal.

9. A fluid seal as claimed in claim 4 or 5, wherein the oil return formation is adapted and arranged to operate in either direction of movement relative to the sealing edge of the surface to be sealed.

10. A fluid seal as claimed in claim 9, wherein the oil return formation includes respective multiplicities of spaced parallel bars inclined to the axis of the seal, individual bars of the said multiplicities alternating in the peripheral direction of the seal and being oppositely inclined with respect to the said axis.

11. A fluid seal as claimed in claim 10, wherein successive, oppositely inclined bars of the said multiplicities thereof exist in end-to-end disposition, thus to provide a continuous barrier in the peripheral direction of the seal.

12. A fluid seal as claimed in any one of the preceding claims, further including resilient means loading the sealing element into sealing engagement with the surface to be sealed, said resilient means comprising a flattened tubular knit fabric of a metallic material arranged in annular form and captively mounted in the seal casing so as resiliently to bear on that side of the sealing element remote from the surface to be sealed.

13. A fluid seal as claimed in claim 12, wherein the flattened tubular knit fabric is folded along the longitudinal axis thereof prior to being arranged in annular form, and bears on the sealing element in spaced parallel locations.

14. A fluid seal as claimed in claim 13, wherein one of the said locations lies in register with the profiled region of the sealing element.

86307216 1

FIG.1

FIG.2

FIG.3

_FIG. 4_

_FIG. 5_

_FIG. 6_

FIG.7

FIG.8

FIG.9